# EUROPEAN PATENT APPLICATION

(11) **EP 2 156 940 A1**
(43) Date of publication of application: **24.02.2010**
(21) Application number: 08014615.2
(22) Date of filing: 18.08.2008
(51) Int. Cl.: B29C 65/50, B29C 65/04, B29C 65/02, B63B 7/08, B64B 1/00, E04H 15/20

(54) **Method for forming a sealed joined of an article for containing pressurized fluids**

(71) Applicant: Fedan NB N.V., Willemstadt, Curaçao (NL)
(72) Inventor: Riwa, Francis, Limo, 60200 Meru (KE)
(74) Representative: Fiammenghi-Domenighetti, Delfina

(57) **Abstract**

Method for forming a sealed joint 6 impermeable to pressurized fluids, said joint connecting a first textile membrane 2 to a second textile membrane 2' by means of a thermoplastic film 3, in which method said thermoplastic film, positioned so that it wraps around one edge of the first textile membrane 2, is applied to the membrane in question, and the second textile membrane 2' is then laid over the thermoplastic film and the latter is applied.

## Description

The present invention relates to the technical field of sealed joints for thermoplastic articles for containing pressurized fluids.

In the present description, the term "textile material" denotes a textile mesh, made from nylon or polyester for example, covered with polyvinyl chloride (PVC), polyurethane or rubber by a coating or calendering process.

There is a known thermoplastic film of adhesive material for connecting two sheets of membrane to form a laminated joint; this technical solution is described in W02005095090. Unfortunately, said solution is not capable of providing a seal when subjected to pneumatic pressure, since the capillary nature of the textile is such that the passage of fluid cannot be prevented.

Up to the present time, all the materials used for textile membranes for containing fluids have been subject to problems of migration of gases or liquids within the textile itself. If this migration takes place when the covering layer is not fully impermeable, there will be a leakage of the contents in the medium term. Consequently, in the best case, where the content is air and the covering layer is slightly porous, it is necessary to restore the initial conditions from time to time, by inflation for example, but in materials for containing gases this migration, if accompanied by external abrasion of the article, gives rise to significant leakage, and simple inflation is no longer sufficient.

The object of the method proposed by the invention is to provide joints for thermoplastic articles which can contain pressurized gases with total pneumatic and hydrostatic sealing and without any leakage. The aforementioned object is achieved by the method described in Claim 1. The invention proposes a method for forming a fluid-tight joint between a first textile membrane and a second textile membrane by means of a thermoplastic film, in which said thermoplastic film is applied by a first thermal and chemical process so that it wraps around one edge of the first textile membrane, the second textile membrane is laid over the thermoplastic film, and the thermoplastic film is applied by a second thermal and chemical process to the second membrane, **characterized in that** the application of the thermoplastic film takes place before the joint with the subsequent and adjacent textile membrane is made.

Further advantages of the invention are as follows:
- The wrapping of the membrane prevents the onset of any migration process.
- Manufacturers of textile membranes can pay more attention to the solution of technical problems relating to the corrosive nature of the materials with which the membrane will come into contact, and can concern themselves to a lesser degree with any problems of possible migration.
- Manufacturers can develop new textile membranes.
- The method according to the invention can be used to form a joint which requires no subsequent quality control.

The method comprises the application of a thermoplastic material which completely wraps the edges of the material and thus prevents any possible passage of fluids by capillary action of the fibres of the material in the textile.

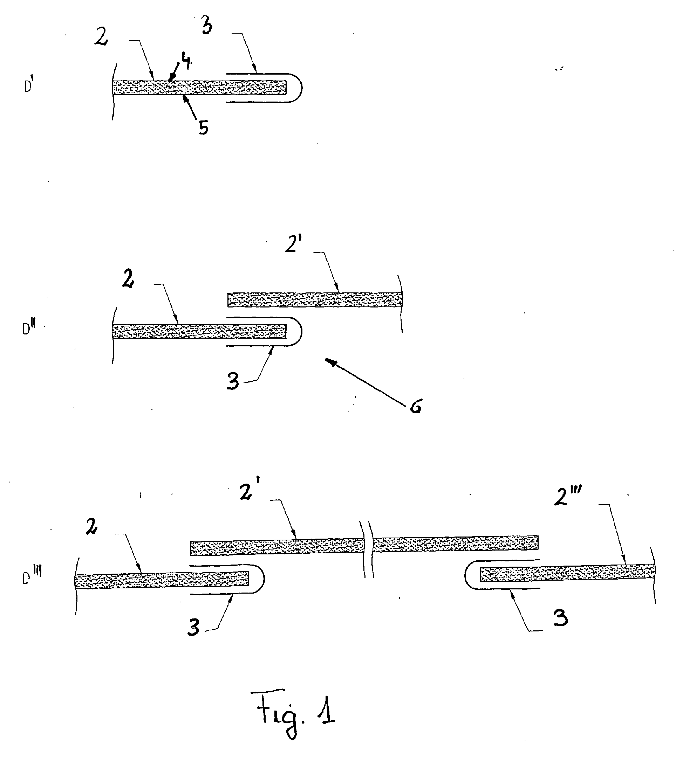

The invention will now be described more fully with reference to the attached Figure 1 which shows schematically a preferred practical embodiment, provided solely as a non-limiting example, since modifications can be made at any time without departure from the scope of the present invention as described in Claim 1.

In the said drawing,

Figure 1 shows schematically the different steps d'-d''' of the method according to the invention.

As shown in Figure 1, the method for forming a sealed joint 6 proposed by the invention consists of two stages, d'-d", as follows: the film of thermoplastic material 3 is welded simultaneously to both sides of a first textile membrane 2 which has already been suitably pre-cut. Application is carried out by a thermochemical process, such as welding, which takes place on both the top side 4 and the underside 5 of the textile membrane, until pre-melting has taken place and the film of thermoplastic material 3 is bonded with the interposed material. A second textile membrane 2' is then laid over the previously treated material, overlapping it by a width which is sufficient and/or greater than the width of the film of thermoplastic material applied to the underlying material. In a subsequent step, d''', it is possible to apply a number of additional textile membranes by the same method.

The sequence of application d'-d" has been designed in such a way that the next edge to be applied is pre-wrapped with the film of thermoplastic material 3 and welded underneath to the preceding edge. This prevents any possibility of the passage of fluids by capillary action through the fibre.

The method for forming the joint in question can be advantageously used not only with high-frequency and/or heat welding but also on materials not belonging to the category of plastomers, such as elastomers, particularly rubber. This application also provides optimum effectiveness in the production of rubberized textile articles which have to be formed by cold adhesion or vulcanization, and which clearly include articles such as rubber dinghies, pneumatic expanders, pneumatic expanders, flexible cisterns, airships, flexible cisterns, air-inflated tents, and any application in which articles are required to be impermeable to gases and liquids contained in them.

## Claims

1. Method for forming a sealed joint (6) impermeable to pressurized fluids, said joint (6) connecting a first textile membrane (2) to a second textile membrane (2') by means of a thermoplastic film (3) interposed between said first textile membrane (2) and said second textile membrane (2'), in which said thermoplastic film (3), positioned so that it wraps around one edge of the first textile membrane (2), is applied by a first thermochemical process (A) to the first textile membrane (2), the second textile membrane (2') is laid over the thermoplastic film (3), and the previously applied thermoplastic membrane (3) is applied by a second thermochemical process (B) to the second membrane (2').

2. Method for forming a sealed joint according to Claim 1, **characterized in that** the first thermochemical process (A) and the second thermochemical process (B) are high-frequency welding processes.

3. Method for forming a sealed joint according to Claim 1, **characterized in that** the first thermochemical process (A) and the second thermochemical process (B) are vulcanization processes.
